# EUROPEAN PATENT APPLICATION

(11) **EP 1 168 263 A1**
(43) Date of publication of application: **02.01.2002**
(21) Application number: 00113080.6
(22) Date of filing: 26.06.2000
(51) Int. Cl.: G07F 19/00, G07F 7/08, G06F 17/60

(54) **Method and system for making payments over the internet**

(71) Applicant: Sormani, Marco, 92100 Boulogne Billancourt (FR); Grillo, Giovanni, 75003 Paris (FR)
(72) Inventor: Sormani, Marco, 92100 Boulogne Billancourt (FR); Grillo, Giovanni, 75003 Paris (FR)
(74) Representative: Modiano, Guido, Dr.-Ing.

(57) **Abstract**

A method and a system for making payments over the Internet by using prepaid cards. A prepaid card operator (10) generates prepaid card codes associated with credit for different denominations which can be used by clients (50) at e-commerce and telematic service sites run by suppliers (60) of goods or services affiliated with the operator (10). The invention reduces the operating risks for the customer (50) arising from the use of credit cards and at the same time relieves goods or service suppliers (60) of the burdens and risks linked to the conventional way of carrying out e-commerce. The invention further allows to reduce the costs associated with the small financial transactions that are typical of current e-commerce development and allow to ensure the anonymity of the user (50), who can access the system by using any technology related to the use of the Internet and regardless of the access point.

## Description

Recent technological development and the diffusion of low-cost telematic tools is radically changing market operating methods as regards the trading of tangible and intangible property.

Moreover, the worldwide diffusion of the Internet and the exponential growth of the number of private users connected to it have opened, and are still opening, new possibilities, creating new requirements also from the commercial standpoint and revolutionizing the behaviors leading and related to ordinary financial transactions.

The main side effect is that the client no longer needs to physically go to a shop or office to make a purchase; thanks to telematics, he can instead act directly from home or from his workplace. Many firms in fact already offer a virtual shop or office, constituted by an Internet site to which a user can connect simply by entering the address (URL) of the chosen site in his Internet browser.

After entering the virtual shop, the user can inspect the products on sale and fill a virtual shopping cart with his purchases directly from his armchair at home. Once he has completed his tour of the shop and selected the items of interest, the customer sends a confirmation message to the supplier of goods and services that runs the e-commerce site, triggering a financial transaction process for the amount due. However, the financial transaction is the critical point of the operation, since the methods so far available do not meet market requirements. Two main different methods are used in addition to the classic cash-on-delivery system. The first method consists in using the credit card: the customer is forced to send the data of his credit card, by means of which the supplier is credited with the sold goods by using the conventional payment networks to which the credit card belongs.

In the second method, the supplier that runs the e-commerce site to which the customer is connected provides prepaid cards, possibly rechargeable ones, or electronic wallets in general, which are managed directly by the supplier and can be spent only on goods or services offered by the supplier.

The two above-described methods evidently have considerable drawbacks, which affect the growth of e-commerce. In particular, the use of credit cards is notoriously subject to fraud and attacks by unauthorized third parties, who can get through the security systems used and acquire the credit card numbers temporarily stored or in transit on the network, exposing the customer to possibly substantial loss. Many customers therefore refuse this method as being too risky and not anonymous. Moreover, a credit card is a resource that not everyone owns or can own and therefore leaves out a considerable number of potential buyers.

The second method described above overcomes the risks due to the use of a conventional credit card but limits the customer's buying options to goods or services offered by the goods or service supplier that runs the e-commerce site where the card can be used. On the one hand, this method limits the potential of the prepaid card, since the customer can only purchase products or use services offered by that supplier, and on the other hand this method is not satisfactory for the supplier, who is forced to personally take on the efforts and risks inherent in the management of the actual payment.

A third method consists of prepaid cards usually charged by means of a credit card by the dealer or the user himself, which cards, to be activated, require a connection to the site run by the service operator, so as to obtain the access password and be allowed to subsequently use the credit on participating sites. Although this method partly solves the aforementioned problems, it forces the user to connect to the site of the operator running the service, overloading the user with additional efforts to activate his credit. Moreover, due to the charging methodologies through credit cards, it requires bespoke terminals by the dealers' and/or credit cards for every single user, thus failing to overcome the disadvantages caused by the use of credit cards.

The aim of the present invention is to overcome the above-noted problems by introducing a new payment system which allows to bypass the problems involved in the above-described methods.

Within the scope of this aim, an object of the present invention is to allow the customer to directly make purchases in any participating e-commerce site limiting, at the same time, the financial risks.

Another object of the present invention is to relieve suppliers of goods and services from the burdens arising from the direct management of electronic wallets and financial transactions in general.

This aim, these objects and others which will become better apparent from the following detailed description are achieved by a system and a method for making payments over a network, comprising the steps of:
-- generating, on the part of an operator, prepaid cards identified by at least one code and associated with a financial credit;
-- acquiring, on the part of a customer, at least one of said codes;
-- connecting, on the part of said customer, to an e-commerce or telematic service site affiliated with said operator;
-- selecting, on the part of said customer, goods or services to purchase at said e-commerce site for a sum;
-- transferring said at least one prepaid card code and said sum to said prepaid card operator;
-- validating, on the part of said prepaid card operator, said sum with respect to said credit;
-- deducting an amount that corresponds to said sum from the residual credit of the card.

Advantageously, the transfer of the data of the prepaid card to the prepaid card operator occurs by means of an encrypted protocol.

Conveniently, the customer can accumulate the residual credit of a plurality of prepaid cards on a single card and display the list of payments and top-ups carried out on a card and any remaining credit. The credit of a prepaid card can also be increased by the prepaid card operator in relation to promotions, rewards or other events.

Advantageously, the entry of the prepaid card codes and the transfer of data to the operator occur by means of a software device included in the e-commerce site where the customer is making his purchases.

Further characteristics and advantages of the present invention will become better apparent from the following detailed description, given by way of non-limitative example and accompanied by the corresponding drawings, wherein:
Figure 1 is a block diagram of the functional and data flow of a preferred embodiment of the system according to the invention;
Figure 2 is a flowchart of the operations according to the claimed method and system;
Figure 3 is a view of an example of graphical interface managed by the software device that is part of the invention;
Figure 4 is a view of an example of graphical interface which allows to accumulate, on a single card, the credit remaining on a plurality of cards.

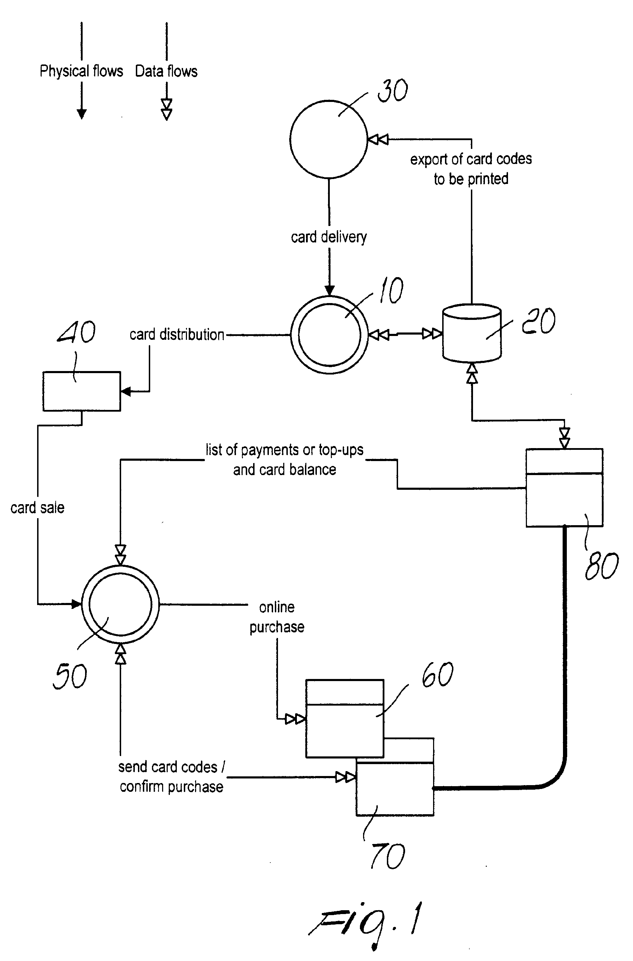

With reference now to Figure 1, a prepaid card operator 10 generates prepaid card codes according to appropriate algorithms and methods chosen by the operator and stores them in a database 20. For example, the codes can include a sequence of alphanumeric characters in which some characters are letters, others are numerals, and others are control characters. At the same time, the operator associates with each one of the prepaid card codes a corresponding credit which can be expressed in any form of currency. When they are generated and stored in the database 20, the generated codes are flagged as temporarily unusable.

A list of the freshly generated codes is provided to a prepaid card manufacturer or printer 40, which prints the physical copies to be delivered to distributors and dealers 50. Once the cards have been physically manufactured, the prepaid card operator 10 removes the unusable flag from the code database 20 and distributes to the dealers 50 the cards, which from that point onward are ready for purchase by customers 60. After purchasing one or more prepaid cards, the customer 50 searches for goods or services in which he is interested. Once the customer 50 has found the items to be purchased offered by a supplier 60 who is affiliated with the payment system provided by the prepaid card operator 10, the customer uses a device 70, made available at the site of the supplier 60, which can communicate with the gateway 80 of the operator 10. The device 70 can be accessed by means of a graphical interface 310 which is displayed within a page 300 of the site and is used by the customer 50 to enter his prepaid card code or codes 330 sufficient to cover the sum due 320. The prepaid card operator 10 sends the customer 50 a confirmation that the transaction has been performed and sends the supplier 60 a confirmation that the purchase has occurred. The ordering data for the purchased goods or service are then entered in the proprietary information systems of the supplier 60 and lead to the completion of the order placed by the customer 50.

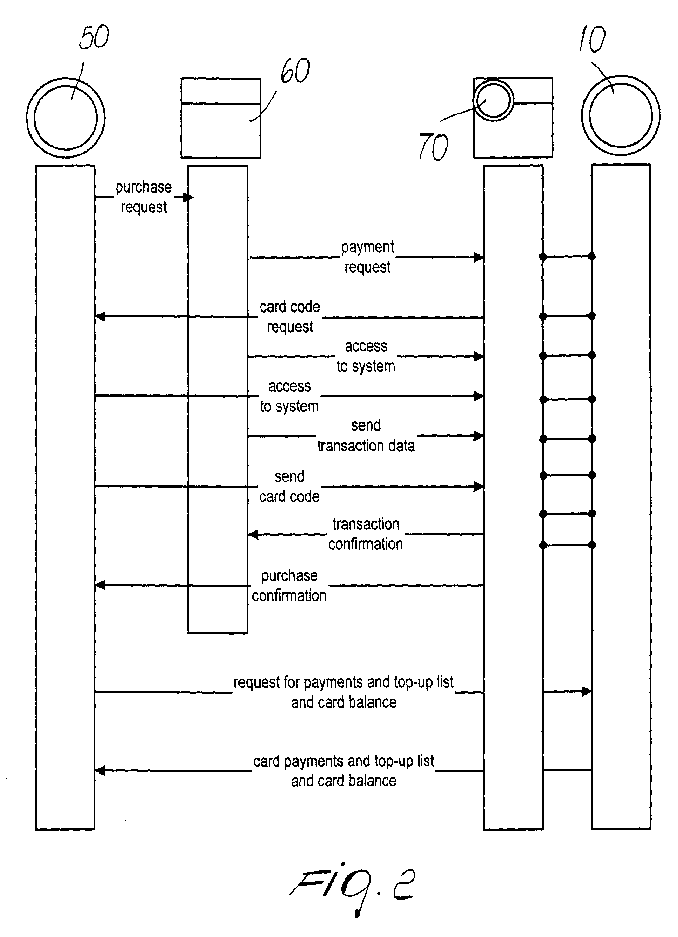

The most critical step, i.e., the step related to the exchange of information between the customer 50, the supplier 60 and the operator 10, is shown in greater detail in Figure 2. The customer 50 sends to the supplier 60 a request to purchase selected goods or services. As a consequence of this request, the supplier 60 in turn sends a payment request to the prepaid card operator 10, who waits directly for the customer 50 to enter one or more code numbers of valid prepaid cards. The device 70 that has the interface 310 used by the customer 50 to enter the requested codes 330 can be provided by the operator 10 itself, in the form of an information-processing object produced according to methods made available by the art in the field, for example in the form of an autonomous component such as an ActiveX component or Java applet. By doing so, the supplier 60 is fully relieved of the burden and risks of directly managing the transactions and never gains possession of the prepaid card codes, which as mentioned are received directly by the operator 10.

The operator 10 checks that the codes entered by the customer 50 match those of prepaid cards that have actually been put on the market by comparing them with the codes contained in the database 20; the operator 10 further checks that the codes entered by the customer 50 correspond to a residual credit which is sufficient to cover the transaction. If so, the transaction is completed, reducing the residual credit of the prepaid card and updating the database 20. If the customer 50 has sent the codes of a plurality of prepaid cards, the sum due is preferably charged starting from the cards that have the lowest credit, so as to optimize use of the remaining cards and spare the customer from ending up with many cards bearing a small remaining credit. Finally, the operator 10 logs the transaction data, such as for example the individual payment or top-up, the outcome and the date of the operation, the card code, the supplier code 60 and the value of the sum deducted from the prepaid card, and finally provides a response regarding the outcome of the transaction.

The supplier 60 receives the response from the operator 10 and processes the order, giving a successful outcome to the customer 50 if the response of the operator 10 is positive or canceling the purchase order if the response is negative. This triple interaction and triple check (customer 50 - supplier 60, customer 50 - operator 10, supplier 60 - operator 10) occurs in real time, preferably by means of dedicated Internet connections. The communications protocol used is of the secure type, preferably of the SSL (Secure Sockets Layer) type.

The various transactions made in favor of a same supplier 60 therefore constitute a set of payments or top-ups that must be paid by the prepaid card operator 10.

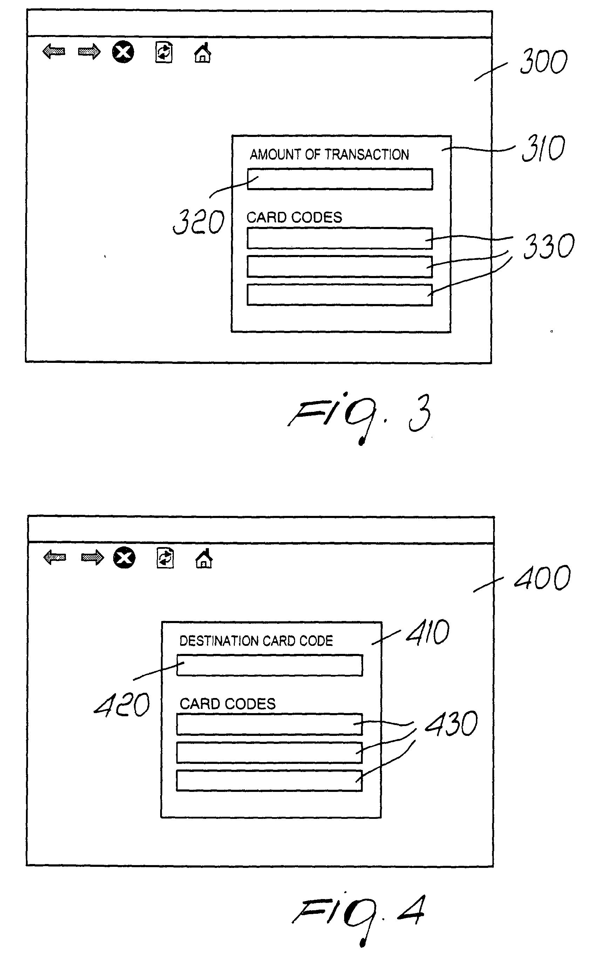

Moreover, the customer 50 can ask the prepaid card operator 10 for the list of payments or top-ups made with a card. In this case, the customer 50 connects to a site managed by the prepaid card operator 10 and, by entering the code of the card, views all the payments or top-ups made with the specified card and its residual credit. Moreover, by connecting to the site of the operator 10, the customer 50 can also transfer the residual credit of a plurality of prepaid cards onto a single card of his choice by means of an appropriate graphical interface 410, shown by way of example in Figure 4 as part of an Internet page 400. In this case, the operator 10, upon receiving the request, checks the codes 430 of the cards entered by the customer 50 and accumulates the remaining credits on the card chosen by the customer and identified by the destination code 420.

Finally, a further additional sum can be credited to a prepaid card directly by the operator in relation to advertising or promotional events, by acting directly on the database 20.

The description of the above-described preferred embodiments is given merely by way of non-limitative example.

The invention thus conceived is susceptible of numerous modifications and variations, which are easy to deduce logically and/or operatively for the expert in the field; all said modifications and variations are within the protective scope of the inventive concept. For example, the prepaid cards can be replaced with any means which allows to communicate securely to a customer 50 codes generated by the operator 10 and stored within the database 20; moreover, its use can be extended to transactions not carried out over the Internet.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for making payments over the Internet, comprising the steps of:
-- generating, on the part of an operator, prepaid cards identified by at least one code and associated with a financial credit;
-- acquiring, on the part of a customer, at least one of said codes;
-- connecting, on the part of said customer, to an e-commerce or telematic service site affiliated with said operator;
-- selecting, on the part of said customer, goods or services to purchase at said e-commerce site for a sum;
-- transferring said at least one prepaid card code and said sum to said prepaid card operator;
-- validating, on the part of said prepaid card operator, said code with respect to the codes stored within the database and said sum with respect to said credit;
-- deducting an amount that corresponds to said sum from the residual credit of the card.

2. The method according to claim 1, **characterized in that** said step of transferring said prepaid card code to said prepaid card operator is performed by means of an encrypted protocol.

3. The method according to claims 1 or 2, **characterized in that** said step of transferring said sum comprises the use of a dedicated device included in an e-commerce system of said supplier.

4. The method according to claim 3, **characterized in that** said dedicated device is a software component.

5. The method according to claim 1, **characterized in that** the credit remaining on two or more of said prepaid cards is transferred, by request of said customer, onto one of said prepaid cards.

6. A system for making payments over the Internet by using prepaid cards, comprising:
-- means for generating and storing codes and credits of prepaid cards;
-- means for selecting goods to be purchased from an e-commerce site for a sum;
-- means for transferring at least one prepaid card code and said sum to said prepaid card operator;
-- means for validating said sum with respect to said credit;
-- means for deducting said sum from said credit.

7. The payment system according to claim 6, **characterized in that** said means for transferring said prepaid card code to said prepaid card operator use an encrypted protocol.

8. The payment system according to claim 6, **characterized in that** said means for transferring said prepaid card code to said prepaid card operator are constituted by a software device included in a site of said supplier.

9. The payment system according to claim 8, **characterized in that** said software device is an autonomous component.

10. The payment system according to claim 6, further comprising means for transferring the credit remaining on two or more of said prepaid cards onto one of said prepaid cards.
